# FASCICULE DE BREVET EUROPEEN

(11) **EP 0 552 574 B1**
(45) Date de publication et mention de la délivrance du brevet: **10.04.1996**
(21) Numéro de dépôt: 92403326.9
(22) Date de dépôt: 08.12.1992
(51) Int. Cl.: E01C 19/10

(54) **Procédé de fabrication d'enrobés routiers par double enrobage**
Verfahren zur Herstellung von Mischgut für Strassendecken mittels zweifacher Beschichtung
Method of preparing coated materials for road surfaces by double coating

(30) Priorité: 24.01.1992 FR 9200771
(43) Date de publication de la demande: 28.07.1993
(73) Titulaire: SCREG, F-78065 St Quentin-En-Yvelines (FR)
(72) Inventeur: Mahe de la Villegle, Bernard, F-44100 Nantes (FR)
(74) Mandataire: Jacobson, Claude

(56) Documents cités:
- FR-A- 2 077 847
- FR-A- 2 623 219
- FR-A- 2 639 375

## Description

La présente invention a pour objet un procédé de fabrication d'enrobés routiers par double enrobage des granulats, utilisant simultanément les techniques à chaud et à froid.

Il est bien connu que les enrobés à chaud ont de bonnes caractéristiques mécaniques, mais leur durée de mise en oeuvre est limitée à quelques heures. Ainsi, les enrobés à froid qui permettent une application pendant un laps de temps plus long et par faibles quantités, ont été développés, et sont largement utilisés surtout lorsqu'il n'existe pas de poste d'enrobage à chaud à proximité des travaux. Bien que l'enrobage à froid fournisse des produits moins homogènes que la technique à chaud, sa maniabilité a justifié son emploi jusqu'à présent.

Des solutions ont été proposées pour pallier les défauts de l'enrobage à froid (voir le document FR-A-2 623 219). Ainsi J.-P. Grimaud (Bull. Liaison Labo. P. et Ch. 50, 13-17 (janv. févr. 1971)) décrit un procédé selon lequel les matériaux plus fins sont enrobés séparément des plus gros avec une émulsion à froid, ce qui permet d'améliorer l'homogénéité de la répartition du liant. Toutefois cette technique fait en général appel à l'utilisation d'un liant très mou (ou fluxé, ou fluidifié), ce qui limite les performances mécaniques de l'enrobé; lorsqu'on utilise un liant plus dur, les matériaux obtenus sont plus résistants mais ne sont pas stockables.

Selon l'invention il est proposé un procédé combinant l'enrobage à chaud d'au moins une fraction des granulats à l'aide d'un liant relativement dur, avec l'enrobage à froid. Le résultat de cette démarche n'est pas forcément celui que l'homme de l'art attendait : en effet, l'introduction d'un liant dur dans une fraction des granulats permet d'obtenir, après le deuxième enrobage, un matériau évolutif et stockable dont la résistance après mise en oeuvre et compactage va être plus forte que dans le cas habituel où chaque fraction des granulats reçoit le même liant mou (provenant de l'émulsion) que la fraction grossière. Le liant anhydre de l'enrobage à chaud et le liant mou de l'émulsion vont se combiner pour donner un liant final aux caractéristiques mécaniques renforcées : le matériau fini, compacté va mûrir et sa stabilité à terme sera meilleure.

L'invention concerne donc un procédé de fabrication d'enrobés routiers en deux étapes, caractérisé en ce que (1) on effectue un préenrobage à chaud d'au moins une partie des fractions granulaires utilisées à l'aide d'un liant anhydre en une proportion telle qu'après refroidissement le matériau ne soit pas cohésif et, (2) on procède à l'enrobage à froid de l'ensemble du matériau précédent et, le cas échéant, d'un complément granulaire, au moyen d'une émulsion de liant.

On entend par "enrobage à chaud", une opération dans une centrale d'enrobage, comprenant l'évaporation de l'eau et la mise à la température d'enrobage du matériau (habituellement de 100° à 200° selon la quantité du liant).

On entend par "enrobage à froid" l'enrobage du matériau dans son état hydrique normal, c'est-à-dire sans chauffage des matériaux et évaporation de l'eau.

Selon diverses variantes préférées dans l'enrobage de matériaux de dimensions particulaires O/D :
- dans l'étape (1) on enrobe la fraction granulaire fine correspondant à un sable, notamment O/d, avec d ≤ 6,3 mm;
- dans l'étape (2) le complément granulaire est constitué par un granulat ne comprenant pas les ultrafines, c'est-à-dire de dimensions d'/D, avec d'≥ 80 µm, D étant le diamètre maximal du gravillon utilisé, notamment 31,5 mm ; par exemple 2/20;
- dans l'étape (2) le complément granulaire correspond à la fraction grossière d/D;
- dans l'étape (1) on enrobe séparément chacune des fractions granulaires O/d et d/D;
- dans l'étape (1) on utilise de 0,5 à 8% en poids de liant;
- dans l'étape (1) on utilise de 1,5 à 8% en poids de liant avec la fraction granulaire fine O/d;
- dans l'étape (1) on utilise de 0,5 à 3% en poids de liant avec la fraction granulaire grossière d/D ou d'/D;
- dans l'étape (1) le liant anhydre est un bitume pur ou ou un bitume-polymère, ayant notamment une pénétrabilité à 25°C ≤ 80; de préférence ≤ 40;
- dans l'étape (2) on utilise de 2 à 10%, de préférence de 4 à 8% en poids d'émulsion de liant (par exemple à environ 60% de liant);
- dans l'étape (2), la teneur en liant résiduel est de 3 à 7% en poids;
- le liant utilisé sous forme d'émulsion peut être un bitume pur ou modifié par un polymère; il peut aussi être fluxé ou fluidifié.

Les exemples suivants illustrent l'invention.

### EXEMPLE 1

On enrobe à chaud 100 parties en poids de sable O/2 fillérisé à 18% avec 3% en poids de bitume dur 10/20.

Après refroidissement du sable préenrobé ainsi obtenu, on mélange ce dernier avec 50 parties en poids de gravillons 2/6 et 150 parties en poids de gravillons 6/10, et on effectue l'enrobage de l'ensemble avec 6% en poids d'une émulsion fluxée ayant une concentration de 60% de bitume.

On obtient un enrobé prêt à l'emploi, dont la stockabilité est fonction du taux de l'agent de fluxage dans l'émulsion.

### EXEMPLE 2

On enrobe à chaud un mélange de 200 parties en poids de gravillons 2/6 et 6/10 avec 1,5% en poids de bitume de pénétrabilité 10/20 et on laisse refroidir. On reprend les gravillons préenrobés ainsi obtenus et on les mélanges avec 100 parties d'un sable 0/2 fillerisé à 18% pour enrober l'ensemble avec 7% en poids d'une émulsion de bitume à 60%.

On obtient un enrobé stockable.

### EXEMPLE 3

On enrobe à chaud 100 parties en poids d'un sable 0/3 fillerisé à 15% à l'aide de 2,5% de bitume de pénétrabilité ≤30, puis on laisse refroidir. Par ailleurs, on enrobe à chaud un mélange de 300 parties de gravillons 4/10 au moyen de 1,5% en poids du même bitume que ci-dessus, et on laisse refroidir.

On enrobe à froid les deux fractions précédentes à l'aide de 5% d'une émulsion à 60% de bitume pour obtenir une grave/émulsion pour couche de base. En variante, on utilise 7% de cette émulsion pour la fabrication d'un enrobé dense à froid pour couche de roulement.

Le module de cette grave/émulsion est très supérieur à ceux généralement admis pour les enrobés denses à froid et les graves/émulsions. L'enrobage étant couramment de la qualité d'un enrobage à chaud, qualité que l'on n'a pas avec les techniques ordinaires.

## Revendications

1. Procédé de fabrication d'enrobés routiers en deux étapes, caractérisé en ce que (1) on effectue un préenrobage à chaud d'au moins une partie des fractions granulaires utilisées à l'aide d'un liant anhydre en une proportion telle qu'après refroidissement le matériau ne soit pas cohésif, puis (2) on procède à l'enrobage à froid de l'ensemble du matériau précédent et, le cas échéant, d'un complément granulaire, au moyen d'une émulsion de liant.

2. Procédé selon la revendicaiton 1, caractérisé en ce que dans l'étape (1) on enrobe la fraction granulaire fine correspondant à un sable.

3. Procédé selon la revendication 1 ou 2, caractérisé en ce que dans l'étape (2) le complément granulaire est constitué par un granulat ne comprenant pas les ultrafines.

4. Procédé selon la revendication 1 ou 2, caractérisé en ce que dans l'étape (2) le complément granulaire correspond à la fraction grossière.

5. Procédé selon la revendication 1, caractérisé en ce que dans l'étape (1) on enrobe séparément chacune des fractions granulaires fine et grossière.

6. Procédé selon l'une quelconque des revendications 1 à 5, caractérisé en ce que dans l'étape (1) on utilise de 0,5 à 8% en poids de liant.

7. Procédé selon la revendication 6, caractérisé en ce que dans l'étape (1) on utilise de 1,5 à 8% en poids de liant avec la fraction granulaire fine.

8. Procédé selon l'une des revendications 1 à 3, caractérisé en ce que dans l'étape (1) on utilise de 0,5 à 3% en poids de liant avec la fraction granulaire grossière.

9. Procédé selon l'une quelconque des revendications 1 à 8, caractérisé en ce que dans l'étape (1) le liant anhydre est un bitume pur ou un bitume-polymère ayant une pénétrabilité à 25°C ≤ 80.

10. Procédé selon l'une quelconque des revendications 1 à 9, caractérisé en ce que dans l'étape (2) on utilise de 2 à 10% en poids d'émulsion de liant.

## Patentansprüche

1. Verfahren zur Herstellung von Straßenbelägen in zwei Schritten, dadurch gekennzeichnet, daß (1) eine Vorbeschichtung im Heißen von mindestens einem Teil der verwendeten granulären Fraktionen mittels einem wasserfreien Bindemittel in einem derartigen Verhältnis durchgeführt wird, daß nach Erkalten die Substanz nicht kohäsiv ist, daß dann (2) im Kalten die Beschichtung der gesamten vorstehenden Substanz und gegebenenfalls eines zusätzlichen granulären Stoffes durch eine Bindemittelemulsion vorgenommen wird.

2. Verfahren nach Anspruch 1, dadurch gekennzeichnet, daß in dem Schritt (1) die feingranuläre Fraktion beschichtet wird, die einem Sand entspricht.

3. Verfahren nach Anspruch 1 oder 2, dadurch gekennzeichnet, daß in dem Schritt (2) der granuläre zusätzliche Stoff aus einem Granulat besteht, das keine Ultrafeinstoffe umfaßt.

4. Verfahren nach Anspruch 1 oder 2, dadurch gekennzeichnet, daß in dem Schritt (2) der granuläre zusätzliche Stoff der groben Fraktion entspricht.

5. Verfahren nach Anspruch 1, dadurch gekennzeichnet, daß in dem Schritt (1) jede der feinen und groben granulären Fraktionen getrennt voneinander beschichtet wird.

6. Verfahren nach irgendeinem der Ansprüche 1 bis 5, dadurch gekennzeichnet, daß in dem Schritt (1) 0,5 bis 8 Gew.-% Bindemittel verwendet werden.

7. Verfahren nach Anspruch 6, dadurch gekennzeichnet, daß in dem Schritt (1) 1,5 bis 8 Gew.-% Bindemittel bei der feingranulären Fraktion verwendet werden.

8. Verfahren nach irgendeinem der Ansprüche 1 bis 3, dadurch gekennzeichnet, daß in dem Schritt (1) 0,5 bis 3 Gew.-% Bindemittel bei der groben granulären Fraktion verwendet werden.

9. Verfahren nach irgendeinem der Ansprüche 1 bis 8, dadurch gekennzeichnet, daß in dem Schritt (1) das wasserfreie Bindemittel ein reiner Asphalt oder ein Asphaltpolymer ist, der eine Durchlässigkeit bei 25°C von ≤ 80 hat.

10. Verfahren nach irgendeinem der Ansprüche 1 bis 9, dadurch gekennzeichnet, daß in dem Schritt (2) 2 bis 10 Gew.-% Bindemittelemulsion verwendet werden.

## Claims

1. Process for the manufacture of road coatings in two stages, characterised in that (1) at least some of the granular fractions used are hot-precoated using an anhydrous binder in a proportion such that, after cooling, the material is not cohesive, then (2) the whole of the preceding material and, where appropriate, a granular complement are cold-coated using a binder emulsion.

2. Process according to claim 1, characterised in that in stage (1) the fine granular fraction corresponding to a sand is coated.

3. Process according to claim I or 2, characterised in that in stage (2) the granular complement is formed by a granulate that does not contain ultrafines.

4. Process according to claim 1 or 2, characterised in that in stage (2) the granular complement corresponds to the coarse fraction.

5. Process according to claim 1, characterised in that in stage (1) each of the fine and coarse granular fractions is coated separately.

6. Process according to any one of claims 1 to 5, characterised in that in stage (1) from 0.5 to 8% by weight of binder is used.

7. Process according to claim 6, characterised in that in stage (1) from 1.5 to 8% by weight of binder is used with the fine granular fraction.

8. Process according to any one of claims 1 to 3, characterised in that in stage (1) from 0.5 to 3% by weight of binder is used with the coarse granular fraction.

9. Process according to any one of claims 1 to 8, characterised in that in stage (1) the anhydrous binder is a pure bitumen or a bitumen polymer having a penetrability at 25°C of ≤ 80.

10. Process according to any one of claims 1 to 9, characterised in that in stage (2) from 2 to 10% by weight of binder emulsion is used.
